# EUROPÄISCHE PATENTSCHRIFT

(11) **EP 0 666 466 B1**
(45) Veröffentlichungstag und Bekanntmachung des Hinweises auf die Patenterteilung: **15.04.1998**
(21) Anmeldenummer: 95100945.5
(22) Anmeldetag: 25.01.1995
(51) Int. Cl.: G01C 9/28, G01C 15/00

(54) **Vorrichtung zum Abstecken einer horizontalen Ebene mittels Wasserwaage**
Device for marking out a horizontal plane using a spirit level
Appareil pour relever un plan horizontal avec niveau à bulle

(30) Priorität: 03.02.1994 DE 9401752 U
(43) Veröffentlichungstag der Anmeldung: 09.08.1995
(73) Patentinhaber: Stabila-Messgeräte Gustav Ullrich GmbH & Co.KG, D-76855 Annweiler am Trifels (DE)
(72) Erfinder: von Wedemeyer, Peter, Dipl.-Ing., D-76855 Annweiler am Trifels (DE)
(74) Vertreter: Patentanwälte Möll und Bitterich

(56) Entgegenhaltungen:
- EP-A- 0 488 046
- EP-A- 0 559 489
- US-A- 4 194 237

## Beschreibung

Die Erfindung betrifft Vorrichtungen zum Abstecken einer horizontalen Ebene mit einer herkömmlichen Wasserwaage, gegebenenfalls Laser-Wasserwaage, mit Gehäuse.

Nivellierteller werden seit vielen Jahren dazu verwendet, um Theodoliten und andere optische Meßgeräte zu horizontieren. Sie besitzen üblicherweise einen Oberteller und einen Unterteller, die mit Hilfe von Justierschrauben in zwei Ebenen gegeneinander verstellt werden können. Mit einer Wasserwaagen-Libelle kann die horizontale Ausrichtung kontrolliert werden. Darüber hinaus besitzen Nivellierteller noch eine Einrichtung, beispielsweise ein Gewinde, zur Befestigung auf einem Stativ sowie eine Halterung zur Befestigung des eigentlichen Meßgerätes.

Ein mit zwei oder drei rotierenden Köpfen ausgerüsteter Rotationslaser, der mit einem zweiteiligen Nivellierteller verbunden ist, wird in der EP-A 0 488 046 offenbart. Der Nivellierteller besteht aus einem Unterteller mit einem Stativgewinde und einem Oberteller, die mit Hilfe von drei Justierschrauben miteinander verbunden sind. Der Oberteller besitzt eine zentrale Bohrung, in die eine mit dem Gehäuse des Rotationslasers verbundene Drehachse eingesetzt ist.

In neuerer Zeit finden zunehmend sogenannte Laser-Wasserwaagen Verwendung, optische Meßgeräte, deren Form und Aufbau mit zwei rechtwinklig zueinander stehenden Libellen einer herkömmlichen Wasserwaage entsprechen, wobei in dem Gehäuse ein Laser und eine geeignete Optik untergebracht sind. Der Laserstrahl ist exakt parallel zur Meßsohle des Wasserwaagenkörpers justiert.

Zur Befestigung derartiger Wasserwaagen, gleichgültig ob mit oder ohne eingebautem Laser, besitzen die handelsüblichen Nivellierteller spezielle meist U-förmige Klemmvorrichtungen. Deren Auflageflächen müssen hochgenau rechtwinklig zur Drehachse des Nivelliertellers ausgerichtet sein, was hohe Bearbeitungskosten erfordert. Auch erfordert die Befestigung der Wasserwaage in der Klemmvorrichtung ein hohes Maß an Sorgfalt seitens des Benutzers. Schließlich sind herkömmliche Nivellierteller auch mit aufwendigen und teuren weil spielfreien Lagerungen ausgerüstet, damit das optische Meßgerät exakt gedreht werden kann. Oft allerdings sind diese Drehlager nicht oder nicht mehr spielfrei und müssen daher regelmäßig nachgestellt werden. Auch können Feuchtigkeit und Schmutz Störungen verursachen.

Der vorliegenden Erfindung liegt die Aufgabe zugrunde, eine einfache und kostengünstige Kombination aus einer Wasserwaage und einem Nivellierteller anzugeben, die ohne Abstriche bei der optischen Genauigkeit einsetzbar ist.

Diese Aufgabe wird gelöst durch eine Vorrichtung mit den Merkmalen des Anspruchs 1.

Ein wesentlicher Vorteil der vorliegenden Erfindung beruht auf der Verwendung von Magneten zur lösbaren Fixierung der Wasserwaage auf dem Nivellierteller. Dank des Magneten liegt die Meßsohle des Wasserwaagengehäuses stets absolut abweichungsfrei auf der planen Oberseite des Obertellers des Nivelliertellers auf. Der Drehzapfen und das mit dem Drehzapfen korrespondierende Loch bewirken eine einfache aber völlig befriedigende Zentrierung und Drehlagerung. Sie muß nicht spielfrei sein, was ein weiterer wesentlicher Vorteil der Erfindung ist.

Gemäß einer ersten Ausgestaltung der Erfindung besteht der Oberteller aus ferromagnetischem Werkstoff und die Wasserwaage besitzt im Bereich ihrer Meßsohle wenigstens einen Haltemagneten. Diese Variante ist besonders dann angezeigt, wenn der Wasserwaagenkörper aus einem nicht-magnetischen Material besteht, beispielsweise aus Leichtmetall.

Gemäß einer Variante dazu besteht der Oberteller aus nicht-magnetischem Werkstoff und der Haltemagnet ist in den Oberteller eingesetzt. Die Wasserwaage besitzt wenigstens im Bereich des Haltemagneten ferromagnetische Eigenschaften. Im einfachsten Fall ist in das Wasserwaagengehäuse ein Stück Eisen eingelegt.

Auch für die Anordnung von Drehzapfen und Loch gibt es zwei Möglichkeiten.

Bei der ersten Ausgestaltung steht der Drehzapfen auf der Oberfläche des Obertellers und das korrespondierende Loch befindet sich in der Meßsohle der Wasserwaage. Diese Variante hat den Vorteil, daß die Wasserwaage auch ohne Nivellierteller ohne jede Einschränkung verwendet werden kann.

Gemäß einer Variante hierzu besitzt der Oberteller das mit dem Drehzapfen korrespondierende Loch, während der Drehzapfen auf der Meßsohle der Wasserwaage steht. Hierbei empfiehlt es sich, den Drehzapfen versenkbar zu machen.

Vorzugsweise befindet sich die Zapfen-Loch-Verbindung im Zentrum der magnetischen Haltekraft, so daß beim Drehen der Wasserwaage keine zusätzlichen Momente entstehen.

Durch geeignete Abstimmung der Magnethaltekraft wird eine spielfreie Drehung in der Horizontalen und gleichzeitig eine wünschenswerte Brems- bzw. Haft kraft erreicht.

Anhand der Zeichnung soll die Erfindung in Form eines Ausführungsbeispiels näher erläutert werden. Es zeigen
- Fig. 1: teilweise aufgebrochen eine Seitenansicht einer ersten Kombination aus Wasserwaage und Nivellierteller,
- Fig. 2: eine Draufsicht auf die Kombination der Fig. 1. und
- Fig. 3: teilweise aufgebrochen eine Seitenansicht einer zweiten Kombination aus Wasserwaage und Nivellierteller.

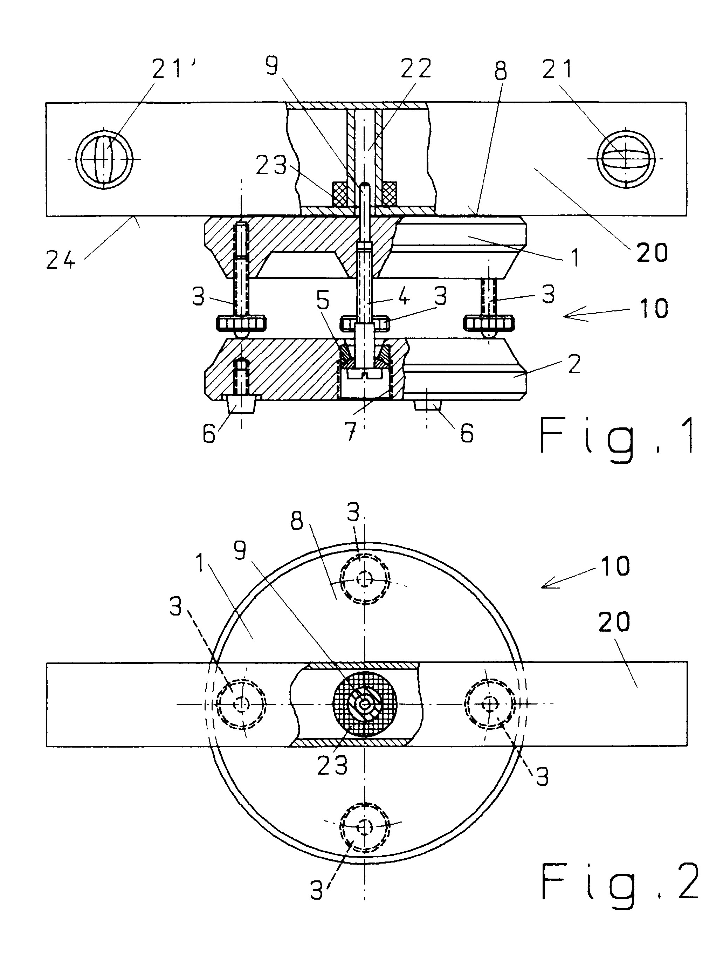

Die Fig. 1 und 2 zeigen teilweise aufgebrochen eine erste Kombination aus einer Wasserwaage 20 mit Libellen 21, 21' und einem Nivellierteller 10. Letzterer besteht aus einem kreisscheibenförmigen Oberteller 1 und einem kreisscheibenförmigen Unterteller 2, die über eine zentrale Verbindungsschraube 4 lösbar miteinander verbunden sind. Zwischen Ober- und Unterteller 1, 2 sind außerdem vier Justierschrauben 3 vorgesehen. Die zentrische Verbindungsschraube 4 ist im Unterteller 2 mittels Kugelscheibe und -pfanne 5 gelagert, so daß der Oberteller 1 gegenüber dem Unterteller 2 eine Taumelbewegung ausführen kann, wenn die Justierschrauben 3 betätigt werden.

Zur Befestigung des Untertellers 2 an einer Halterung, beispielsweise einem Stativ, ist ein Stativgewinde 7 vorgesehen. Drei Füße 6 ermöglichen das Abstellen des Nivelliertellers 10 auf einer Unterlage.

Der Oberteller 1 besteht aus ferromagnetischem Material, beispielsweise Stahl. Seine Oberfläche 8 ist absolut plan. Sie dient als Auflagefläche für die Meßsohle 24 der Wasserwaage 20. Im Zentrum erhebt sich ein Drehzapfen 9. Das Gehäuse der Wasserwaage 20 besitzt ein korrespondierendes Loch 22, so daß nach dem Aufstecken der Wasserwaage 20 auf den Drehzapfen 9 eine Zapfen-Loch-Verbindung besteht, um die die Wasserwaage 20 gedreht werden kann.

Die Wasserwaage 20 ist ihrerseits mit wenigstens einem Haltemagneten 23 ausgerüstet, wobei das Zentrum der magnetischen Haltekraft mit dem Drehzapfen 9 bzw. dem entsprechenden Loch 22 im Wasserwaagengehäuse zusammenfällt. Dadurch wird dem Entstehen von Kippmomenten beim Drehen der Wasserwaage 20 um den Drehzapfen 9 vorgebeugt.

Zum Horizontieren des Obertellers 1 wird die Wasserwaage 20 zunächst über zwei diagonal gegenüberliegende Justierschrauben 3 gestellt. Diese werden so lange verstellt, bis die Libelle 21 der Wasserwaage 20 zentriert ist. Anschließend wird die Wasserwaage 20 um 90 Grad gedreht und die beiden anderen Justierschrauben 3 werden eingestellt. Abschließend werden die beiden Justierungen nochmals überprüft, gegebenenfalls wird fein nachjustiert und der Horizontiervorgang ist beendet. Durch Drehen der Wasserwaage 20 um den Drehzapfen 9 läßt sich jetzt die gewünschte horizontale Ebene spielfrei abstecken, da die Meßsohle 24 stets plan auf der planen Oberfläche 8 des Obertellers 1 liegt.

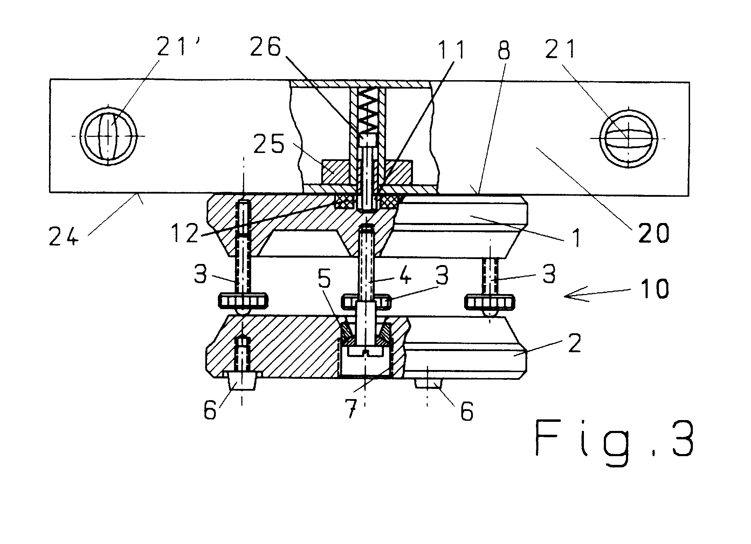

Fig. 3 zeigt teilweise aufgebrochen eine zweite Kombination aus einer Wasserwaage 20 und einem Nivellierteller 10. Hier besteht der Oberteller 1 aus nicht-magnetischem Material. In seine plangeschliffene Oberfläche 8 ist ein Haltemagnet 12 eingesetzt. Im Zentrum der magnetischen Haltekraft erkennt man eine Vertiefung 11.

Ein Drehzapfen 26, der federnd in die Wasserwaage 20 eingesetzt ist, ragt über die Meßsohle 24 hinaus und taucht in die Vertiefung 11 im Oberteller 1 ein. Auf diese Weise entsteht wieder die Zapfen-Loch-Verbindung, um die die Wasserwaage 20 gedreht werden kann.

Es versteht sich, daß die Kombination aus Nivellierteller 10 und Laser-Wasserwaage 20 genauso gut funktioniert, wenn die Libellen in den Oberteller 1 integriert sind.

## Patentansprüche

1. Vorrichtung zum Abstecken einer horizontalen Ebene, umfassend
- eine herkömmliche Wasserwaage (20), gegebenenfalls Laser-Wasserwaage,
-- mit einem Gehäuse
-- und einer Meßsohle (24),
- und einen Nivellierteller (10), der einen Oberteller (1) mit planer Oberfläche (8) besitzt,
-- mit einer Einrichtung zum lösbaren Befestigen der Wasserwaage (20) am Oberteller (1) bestehend aus
--- einem Drehzapfen (9, 26) am einen Teil (1, 20),
--- einem mit dem Drehzapfen (9, 26) korrespondierenden Loch (11, 22) am anderen Teil (20, 1),
--- einem Haltemagneten (23, 12) am einen Teil (1, 20)
--- und einem ferromagnetischen Gegenstück (8, 25) am anderen Teil (20, 1)
-- und mit Justierschrauben (3) zum Horizontieren der Wasserwaage (20).

2. Vorrichtung nach Anspruch 1, zusätzlich enthaltend die Merkmale:
- der Oberteller (1) besteht aus ferromagnetischem Werkstoff,
- die Wasserwaage (20) besitzt wenigstens einen Haltemagneten (23) im Bereich der Meßsohle (24).

3. Vorrichtung nach Anspruch 1, zusätzlich enthaltend die Merkmale:
- der Oberteller (1) besteht aus nicht-magnetischem Werkstoff,
- der Haltemagnet (12) ist in den Oberteller (1) eingesetzt,
- die Wasserwaage (20) umfaßt wenigstens im Bereich des Haltemagneten (12) ferromagnetisches Material (25).

4. Vorrichtung nach Anspruch 1, 2 oder 3, zusätzlich enthaltend die Merkmale:
- auf der Oberfläche (8) des Obertellers (1) steht der Drehzapfen (9),
- die Wasserwaage (20) besitzt das mit dem Drehzapfen (9) korrespondierende Loch (22).

5. Vorrichtung nach Anspruch 1, 2 oder 3, zusätzlich enthaltend die Merkmale:
- auf der Meßsohle (24) der Wasserwaage (20) steht der Drehzapfen (26),
- der Oberteller (1) besitzt das mit dem Drehzapfen (26) korrespondierende Loch (11).

6. Vorrichtung nach Anspruch 5, zusätzlich enthaltend das Merkmal:
- der Drehzapfen (26) ist versenkbar.

7. Vorrichtung nach Anspruch 1, zusätzlich enthaltend das Merkmal:
- Loch (11, 22) und Drehzapfen (9, 26) befinden sich im Zentrum der magnetischen Haltekraft.

8. Vorrichtung nach einem der Ansprüche 1 bis 7 zusätzlich enthaltend das Merkmal:
- die Drehlagerung aus Drehzapfen (9, 26) und Loch (11, 22) ist nicht spielfrei.

## Claims

1. An apparatus for marking out a horizontal plane, comprising
- a conventional spirit level (20), optionally a laser spirit level,
-- with a housing
-- and a measuring base (24),
- and a levelling plate (10) which has an upper plate (1) with a flat surface (8),
-- with a device for the releasable fastening of the spirit level (20) on the upper plate (1) comprising
--- a pivot (9,26) on one part (1,20),
--- a hole (11,22) in the other part (20,1) registering with the pivot (9,26),
--- a holding magnet (23,12) on one part (1,20)
--- and a ferromagnetic counterpart (8,25) on the other part (20,1)
-- and with adjusting screws (3) for levelling the spirit level (20).

2. An apparatus according to Claim 1, additionally including the features:
- the upper plate (1) consists of ferromagnetic material,
- the spirit level (20) has at least one holding magnet (23) in the vicinity of the measuring base (24).

3. An apparatus according to Claim 1, additionally including the features:
- the upper plate (1) consists of non-magnetic material,
- the holding magnet (12) is inserted in the upper plate (1),
- the spirit level (20) comprises ferromagnetic material (25) at least in the vicinity of the holding magnet (12).

4. An apparatus according to Claims 1, 2 or 3, additionally including the features:
- the pivot (9) is disposed on the surface (8) of the upper plate (1),
- the spirit level (20) has the hole (22) registering with the pivot (9).

5. An apparatus according to Claims 1, 2 or 3, additionally including the features:
- the pivot (26) is disposed on the measuring base (24) of the spirit level (20),
- the upper plate (1) has the hole (11) registering with the pivot (26).

6. An apparatus according to Claim 5, additionally including the feature:
- the pivot (26) can be countersunk.

7. An apparatus according to Claim 1, additionally including the feature:
- the hole (11,22) and the pivot (9,26) are situated in the centre of the magnetic holding force.

8. An apparatus according to any one of Claims 1 to 7, additionally including the feature:
- the pivot mounting comprising pivot (9,26) and hole (11,22) is not without play.

## Revendications

1. Dispositif pour jalonner un plan horizontal, comprennant un niveau d'eau (20) classique, éventuellement un niveau d'eau à laser, avec un boîtier et une base de mesure (24), et un plateau de nivellement (10), qui possède un plateau supérieur (1) avec une surface (8) plane, avec un système pour la fixation amovible du niveau d'eau (20) sur le plateau supérieur (1) comprennant un pivot (9, 26) sur l'une des parties (1, 20), un trou (22, 11) correspondant au pivot (9, 26) sur l'autre partie (20, 1), un aimant de maintien (23, 12) sur une partie (20, 1) et une pièce ferromagnétique correspondante (8, 25) sur l'autre partie (1, 20) et avec des vis de réglage (3) pour l'ajustement d'horizon du niveau à eau (20).

2. Dispositif selon la revendication 1, comprennant de plus la caractéristique que le plateau supérieur (1) est composé de matériau ferromagnétique, et le niveau d'eau (20) possède au moins un aimant de maintien (23) dans la zone de la base de mesure (24).

3. Dispositif selon la revendication 1, comprennant de plus la caractéristique que le plateau supérieur (1) est composé de matériau non magnétique, l'aimant de maintien (12) est inséré dans le plateau supérieur (1), et le niveau d'eau (20) comprend du matériau ferromagnétique (25) au moins dans la zone de l'aimant de maintien (12).

4. Dispositif selon la revendication 1, 2 ou 3, comprennant de plus la caractéristique que le pivot (9) se trouve à la surface (8) du plateau supérieur (1), et le niveau d'eau (20) possède le trou (22) correspondant au pivot (9).

5. Dispositif selon la revendication 1, 2 ou 3, comprennant de plus la caractéristique que le pivot (26) se trouve sur la base de mesure (24) du niveau d'eau (20), et le plateau supérieur (1) possède le trou (11) correspondant au pivot (26).

6. Dispositif selon la revendication 5, comprennant de plus la caractéristique que le pivot (26) est escamotable.

7. Dispositif selon la revendication 1, comprennant de plus la caractéristique que le trou (11, 22) et le pivot (9, 26) se trouvent au centre du champ magnétique de l'aimant.

8. Dispositif selon l'une quelconque des revendications 1 à 7, comprennant de plus la caractéristique que le pivot (9, 26) et le trou (11, 22) sont assemblés avec jeu dans le logement pivotant.
